# EUROPÄISCHE PATENTSCHRIFT

(11) **EP 1 153 642 B1**
(45) Veröffentlichungstag und Bekanntmachung des Hinweises auf die Patenterteilung: **19.11.2003**
(21) Anmeldenummer: 01110917.0
(22) Anmeldetag: 05.05.2001
(51) Int. Cl.: B01D 39/08, B30B 9/26

(54) **Schlauchförmige Filtermembran**
Tubular filtering membrane
Membrane filtrante tubulaire

(30) Priorität: 11.05.2000 DE 10023099
(43) Veröffentlichungstag der Anmeldung: 14.11.2001
(73) Patentinhaber: Bergemann, Dieter, Dr.-Ing., 70794 Filderstadt (DE); DEUTSCHE INSTITUTE FÜR TEXTIL- UND FASERFORSCHUNG STUTTGART, 73770 Denkendorf (DE)
(72) Erfinder: Bergemann, Dieter, Dr.-Ing., 70794 Filderstadt (DE); Feustel, Mathias, 07950 Triebes (DE); Lehmann, Thilo, 08543 Jocketa/Gde. Pöhl (DE); Milwich, Markus, Dr.-Ing., 72644 Oberboihingen (DE)
(74) Vertreter: Rach, Werner, Dr.

(56) Entgegenhaltungen:
- DE-A- 3 802 037
- DE-B- 1 277 204

## Beschreibung

Die Erfindung betrifft eine schlauchförmige Filtermembran gemäß der im Oberbegriff des Anspruchs 1 definierten Gattung.

Eine Schlauchfiltermembran, die aus gegeneinander verschiebbaren Strängen aufgebaut ist, ist aus der DE 38 02 037 A1 bekannt. Dabei sind die Stränge miteinander verstrickt und bilden einen gestrickten Filterschlauch.

Die deutsche Auslegeschrift DE 1277204 B offenbart eine schlauchförmige Filtermembran mit gegeneinander verschiebbaren Strängen - dort Bündel O genannt -, die miteinander verflochten - dort als gewebt bezeichnet - sind. Dabei besteht jeder Strang aus einer Vielzahl zu einander parallelen und in einer Ebene nebeneinander verlaufenden flexiblen Drähten dünnen Durchmessers. In praktischen Versuchen mit derartigen Schlauchgeflechten zeigte sich, dass sich parallele Drähte innerhalb eines Bündels oder Stranges stets dicht aneinander legen und zwischen sich keine Filteröffnungen bilden. Lediglich an den Kreuzungspunkten der Stränge ergeben sich Öffnungen. Diese machen aber nur einen sehr geringen Anteil an der Gesamtfläche aus.

Aus der EP 0 827 768 A1 ist eine Vorrichtung und ein Verfahren zum Filtern von Suspensionen bekannt. Dabei ist ein zylinderförmiger Filtermantel mit in dem Mantel angeordneten Flüssigkeitsdurchtrittsöffnungen vorgesehen. Der Filtermantel ist als Spalt-, Schlitz- oder Lochsieb ausgeführt und an beiden Enden mit verschließbaren Öffnungen versehen. Die Suspension wird abschnittsweise von oben in den vom Filtermantel gebildeten zylindrischen Raum bei geschlossener unterer Öffnung eingefüllt. Die Flüssigkeit tritt durch die Flüssigkeitsdurchtrittsöffnungen im Filtermantel aus, wobei die Verdichtung gegebenefalls unter Anwendung eines Druckkolbens unterstützt wird. Die Filterrückstände werden durch die untere Öffnung abschnittsweise entfernt. Dann erfolgt eine erneute Befüllung, Entwässerung und Entfernung der Filterrückstände. Diese bekannte Vorrichtung erfordert aufgrund ihres Aufbaues und ihrer Arbeitsweise einen mechanisch festen, steifen und sehr stabilen Filtermantel. Dies ist nur mit entsprechend hohen Kosten oder relativ geringem Trocknungsgrad zu erreichen. Darüber hinaus sind besondere Gestaltungen der Flüssigkeitsdurchtrittsöffnungen und zusätzliche Reinigungsvorrichtungen nötig, um diese Flüssigkeitsdurchtrittsöffnungen nach Filtervorgängen wieder von Feststoffen zu befreien.

Aus der DE 197 14 959 A1 ist ein gewebter Schlauchfilter für Flüssigkeitsfiltration bekannt, der horizontal an beiden Enden an Zu- bzw. Ablauf angeschlossen ist und der mit einer Schraubenfeder über seiner Länge umgeben ist und von ihr gestützt wird. Der Innendurchmesser der Schraubenfeder ist knapp geringer als der Außendurchmesser des gewebten Filterschlauches. Die Schraubenfeder kann gestreckt oder gestaucht den Schlauchfilter umgeben und beide Elemente können gemeinsam oder getrennt um die gemeinsame Längsachse gedreht werden. Dabei kann eine Art peristaltischer Bewegung des Schlauchfilters entstehen. Zur Entfernung des im Inneren des Schlauchfilters erhaltenen Filterkuchens wird die Anordnung aus der Anlage genommen und extern entleert. Dies ist offensichtlich sehr aufwendig. Darüberhinaus ist die Entfernung von Filtratresten von der Innenseite des rundgewebten Textilschlauches, der als gewebter Schlauchfilter vorgesehen ist, recht schwierig.

Aufgabe vorliegender Erfindung ist es, eine schlauchförmige Filtermembran zu schaffen, die ohne Stützkonstruktion auskommt, hohe und effektive Trocknungsgrade ermöglicht, leicht von den Filterrückständen zu befreien ist, variabel einsetzbar und insgesamt sehr kostengünstig ist. Weiterhin soll eine sehr hohe Filterfläche mit vielen Öffnungen geschaffen werden.

### Vorteile der Erfindung

Die erfindungsgemäße schlauchförmige Filtermembran mit den kennzeichnenden Merkmalen des Anspruchs 1 löst diese Aufgabe. Die erfindungsgemäße Schlauchfiltermembran hat gegenüber dem Stand der Technik den Vorteil, dass sie selbsttragend ist, d. h. ohne jegliche radiale Abstützung auskommt, und eine hohe volumenspezifische Filterfläche bezogen auf das Filterkuchenvolumen aufweist und damit einen geringen mittleren Weg der Filtratflüssigkeit durch den Filterkuchen zur Filtermembran, woraus sich eine effektive Leistungsabgabe und somit kurze Zykluszeiten für das Filtern ergeben. Ein weiterer wesentlicher Vorteil ist darin zu sehen, dass sich ein insgesamt geringeres Bauvolumen je Filterfläche ergibt.

Gemäß der Erfindung wird dies prinzipiell dadurch erreicht, dass die gegeneinander verschiebbaren Stränge, aus denen die Schlauchfiltermembran aufgebaut ist, miteinander verflochten sind, die Stränge einen Winkel im Bereich von etwa 25 - 55° mit der Längsachse der Schlauchfiltermembran bilden, jeder Strang aus zumindest zwei Litzen aufgebaut ist, und jede Litze aus zumindest zwei Fäden besteht, die miteinander verzwirnt oder verdrillt oder verflochten sind.

Durch den Aufbau der Schlauchfiltermembran aus gegeneinander verschiebbaren Strängen, die miteinander verflochten sind, kommt es bei axialer Kontraktion oder Streckung des schlauchartigen Gitternetzes zu einer Querschnittserweiterung bzw. -verengung in Verbindung mit einer Änderung der ,Maschenweite', d.h. einer Änderung des Querschnitts der Öffnungen, durch welche die Filtratflüssigkeit durch die Filtermembran tritt, und einer Änderung des Schlauchinnenvolumens. Somit kann durch passive oder aktive Längenänderung der Schlauchfiltermembran einerseits ein Öffnen und Schließen der Filterporen, bis hin zur Selbstreinigung, und andererseits ein für die Filtration wirksamer Nachpressdruck im Schlauchinnenraum auf- bzw. abgebaut werden, bis hin zum selbsttätigen Ablösen des stabförmigen Filterkuchens von der und gegebenenfalls Herausfallen aus der Schlauchfiltermembran.

Durch die in den weiteren Ansprüchen niedergelegten Merkmale sind vorteilhafte Weiterbildungen und Verbesserungen der im Anspruch 1 angegebenen Schlauchfiltermembran möglich.

Entsprechend vorteilhafter Ausgestaltung können bei der erfindungsgemäß gestalteten Filtermembran die Litze aus zwei oder drei Fäden oder aus 2 mal 2 Fäden oder aus 2 mal 3 Fäden, oder 3 mal 2 Fäden oder 3 mal 3 Fäden aufgebaut sein. Dadurch kann bereits in diesen Bauteilen der Schlauchfiltermembran für gewünschte Öffnungsweiten gesorgt werden und eine gewisse Längsverschieblichkeit erreicht werden.

In weiterer Ausgestaltung der Erfindung besteht die Litze aus 3 Fäden oder 3 Litzen, die ihrerseits als Zopf geflochten sind. Durch diese Gestaltungsvariation wird zusätzlich zur flächigen Öffnung eine räumliche Veränderungsmöglichkeit eröffnet, um die Variabilität der Filtrieröffnungen zu erhöhen.

Entsprechend einer weiteren vorteilhaften Ausgestaltung der Erfindung ist jeder Faden aus einem Monofilament oder einem Multifilament gleichen oder unterschiedlichen Durchmessers und/oder gleichen oder unterschiedlichen Materials aufgebaut. Diese Ausgestaltungsmöglichkeiten eröffnen die Anpassung an verschiedene Filtrieraufgaben, die in Industrie und der öffentlichen Hand für verschiedenste Zwecke vorkommen und zu lösen sind.

Entsprechend einer ganz wesentlichen und zweckmäßigen Weiterbildung der Erfindung sind für einen gewünschten Durchmesser des Geflechtschlauchs bei dem Verflechten unterschiedlich viele Stränge, insbesondere 40, 80, 144 vorgesehen und es ist eine unterschiedliche Fachung verwendet, insbesondere eine 3-fach oder 4-fach Fachung. Somit lässt sich flexibel die Größe der Schlauchfiltermembran an die jeweiligen Gegebenheiten anpassen.

In vorteilhafter Ausgestaltung der Erfindung sind die Litzen, aus denen die Stränge aufgebaut sind, im wesentlichen nebeneinander angeordnet. Damit wird für eine optimale Anordnung der Flüssigkeitsdurchtrittsöffnungen im Bereich des zylindrischen Mantels zuverlässig Sorge getragen. In den Litzen und Stängen vorhandene Öffnungen werden somit nicht durch Material anderer Litzen und Stränge verdeckt.

In besonders zweckmäßiger Ausgestaltung der Erfindung, die ebenfalls zur wesentlichen Lebensdauerverlängerung und der flexiblen Gestaltungsmöglichkeit beiträgt, ist vorgesehen, dass die Fäden aus Kunststoff, insbesondere aus Polyester (PET), Polyamid (PA), ElasTer, Polytetrafluorethylen (PTFE), Polyvinylidenfluorid (PVDF) oder aus Metall oder einem Gemisch dieser Materialien bestehen.

In weiterer vorteilhafter Ausgestaltung der erfindungsgemäßen Schlauchfiltermembran erfolgt die Zwirnung der einzelnen Litzen in einer S/Z-Zwirnung mit etwa gleicher Drehung pro Längeneinheit, insbesondere ca. 125, 250, 350, 400, 800 T/m (Drehungen pro Meter), wobei die Drehung entsprechend dem Fadendurchmesser gewählt ist und insbesondere eine Drehung etwa dem 5- bis 20-Fachen des Fadendurchmessers von etwa 0,01 bis 1 mm entspricht.

Entsprechend einer weiteren Ausgestaltung der Erfindung sind die Stränge in unterschiedlicher Flechtart verflochten, insbesondere in abwechselnder Weise ein Strang über dem anderen, ähnlich der Leinenbindung, oder zwei Stränge über zwei Strängen, ähnlich einer Köperbindung.

In weiterer vorteilhafter Ausgestaltung der Erfindung ist die Innenseite der Schlauchfiltermembran geglättet. Eine weitere Flexibilisierung wird dadurch erreicht, dass durch geeignetes Erwärmen das Geflecht mittels Wärmeschrumpfung der aus bestimmten Materialien, wie insbesondere Kunststoff, bestehenden Schlauchfiltermembran verdichtbar ist.

### Zeichnung

Die Erfindung ist anhand von in der Zeichnung dargestellten Ausführungsbeispielen der erfindungsgemäß gestalteten Schlauchfiltermembran in der nachfolgenden Beschreibung näher erläutert. Die Figuren zeigen im Einzelnen:
- Fig.1: in schematisierter projizierter Darstellung eine geflochtene, zylindrische Schlauchfiltermembran gemäß der Erfindung;
- Fig. 2: schematisch in abgewickelter Form das Geflecht für die Schlauchfiltermembran entsprechend der Erfindung, wobei ein anders aufgebauter Strang als in Fig. 1 verwendet ist;
- Fig. 3: schematisch in vergrößerter Darstellung den Querschnitt durch den in Fig. 2 verwendeten Strang;
- Fig. 4: schematisch in Draufsicht und in vergrößerter Darstellung den in Fig. 2 verwendeten Strang;
- Fig. 5: schematisch in perspektivische Ansicht und in vergrößerter Darstellung den in Fig. 2 verwendeten Strang;
- Fig. 6: schematisch und in wesentlich vergrößerter Darstellung die Flechtart, die Art des Stranges und die verwendete Litze des in Fig. 2 dargestellten abgewickelten Schlauchgeflechts;
- Fig. 7: im Querschnitt einen Strang, der aus acht direkt nebeneinander liegenden Einzelfäden besteht, entsprechend dem Stande der Technik;
- Fig. 8: im Querschnitt einen Strang, der aus vier nebeneinander liegenden Litzen besteht, wobei jede Litze aus zwei verdrillten Fäden besteht, entsprechend der Erfindung;
- Fig. 9: im Querschnitt einen Strang, der aus vier nebeneinander liegenden Litzen besteht, wobei jede Litze aus drei verdrillten Fäden besteht, entsprechend der Erfindung;
- Fig. 10: im Querschnitt einen Strang, der aus vier nebeneinander liegenden Litzen besteht, wobei jede Litze aus vier verdrillten Fäden besteht, entsprechend der Erfindung;
- Fig. 11: im Querschnitt einen Strang, der aus vier nebeneinander liegenden Litzen besteht, wobei jede Litze aus zwei miteinander verdrillten Sub-Litzen besteht und jede Sub-Litze selbst aus je zwei ebenfalls miteinander verdrillten Fäden aufgebaut ist, entsprechend der Erfindung;
- Fig. 12: im Querschnitt einen Strang, der aus vier nebeneinander liegenden Litzen besteht, wobei jede Litze aus zwei miteinander verdrillten Litzen besteht und jede Litze selbst aus je drei ebenfalls miteinander verdrillten Fäden aufgebaut ist, entsprechend der Erfindung;
- Fig. 13: schematisch in Draufsicht und in vergrößerter Darstellung einen Strang, der aus drei Litzen aufgebaut ist und bei dem jede Litze selbst aus zwei miteinander verdrillten Paaren bzw. Sub-Litzen von je zwei miteinander verdrillten Fäden besteht;
- Fig. 14: schematisch in perspektivische Ansicht und in vergrößerter Darstellung den in Fig. 13 dargestellten Strang;
- Fig. 15: schematisch in vergrößerter Darstellung den Querschnitt durch den in Fig. 13 und 14 dargestellten Strang;
- Fig. 16: schematisch in Draufsicht und in vergrößerter Darstellung einen Strang, der aus drei Litzen aufgebaut ist und bei dem jede Litze selbst aus einem geraden Mittelfaden und einen darum herum gewundenen äußeren Faden besteht;
- Fig. 17: schematisch in perspektivische Ansicht und in vergrößerter Darstellung den in Fig. 16 dargestellten Strang, und

- Fig. 18: schematisch in vergrößerter Darstellung den Querschnitt durch den in Fig. 16 und 17 dargestellten Strang.

### Beschreibung der Ausführungsbeispiele

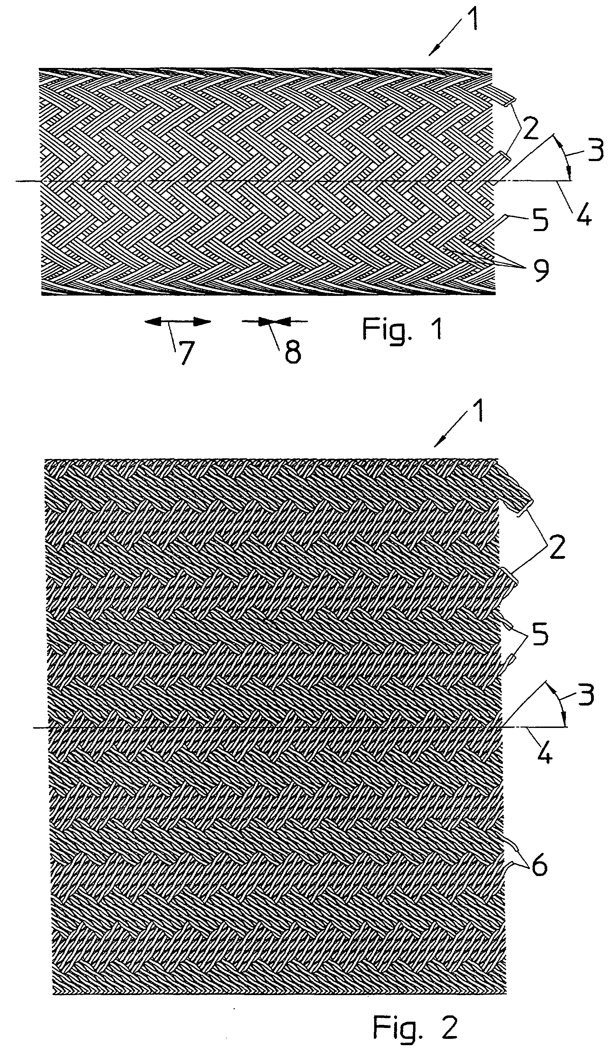

In Fig. 1 ist schematisch die erfindungsgemäß gestaltete Schlauchfiltermembran 1 in ganz allgemeiner Form dargestellt. Die in projizierter Darstellung gezeigte zylindrische Schlauchfiltermembran 1 ist aus gegeneinander verschiebbaren Strängen 2 aufgebaut, die miteinander verflochten sind. Diese Stränge 2 bilden einen Winkel 3 mit der Längsachse 4 der Schlauchfiltermembran 1. Der Winkel kann zwischen einem Wert von etwa 25° bis 55° betragen. Jeder einzelne Strang 2 ist aus zumindest zwei Litzen 5 aufgebaut, wobei jede Litze 5 ihrerseits aus zumindest zwei Fäden 6 besteht. Diese Fäden 6 sind miteinander verzwirnt oder verdrillt oder können auch miteinander verflochten sein. Die Schlauchfiltermembran 1 kann in Richtung des Doppelpfeils 7 in die Länge gezogen werden, wobei sich daraus eine Verkleinerung des Winkels 3 in Richtung auf den Wert 25° ergibt oder sie kann entsprechend dem Doppelpfeil 8 gestaucht werden, so dass sich eine Vergrößerung des Winkels 3 bis zu dem Wert von 55° ergibt. An den Kreuzungspunkten der verschiebbaren Stränge 2 ergeben sich Öffnungen 9, die entsprechend dem Winkel 3 unterschiedliche Größen haben können. Zusätzlich zu den Öffnungen 9 an den Kreuzungspunkten der Stränge 2 ergeben sich mit Filterwirkung arbeitende Öffnungen 10 aufgrund der Gestaltung der Stränge 2 und der dort verwendeten Konstruktion der Litzen 5 sowie der Fäden 6.

In Fig. 2 ist schematisch in abgewickelter Form das Geflecht für die Schlauchfiltermembran 1 entsprechend der Erfindung dargestellt, wobei ein erfindungsgemäß aufgebauter Strang 2 verwendet ist, der anders als der in Fig. 1 dargestellte ist. Der Strang 2 entsprechend der Ausführungsform in Fig. 2 besteht aus vier Litzen 5, die aus je zwei miteinander verdrillten Fäden 6 bestehen. Sie sind nebeneinander angeordnet. Neben den Öffnungen 9 an den Kreuzungspunkten der miteinander verflochtenen Stränge 2 ergeben sich weitere Öffnungen 10 innerhalb der Stränge, da es Durchtrittsöffnungen zwischen den nebeneinander liegenden Litzen 5 gibt, die ja jeweils aus den zwei miteinander verdrillten Fäden 6 bestehen. Eine Abdeckung ohne Öffnungen ist daher nicht möglich. Je nach dem Durchmesser der Fäden 6 und der Stärke der Verdrillung können Größe und Gestalt der Öffnungen innerhalb der Litze 5 gesteuert werden.

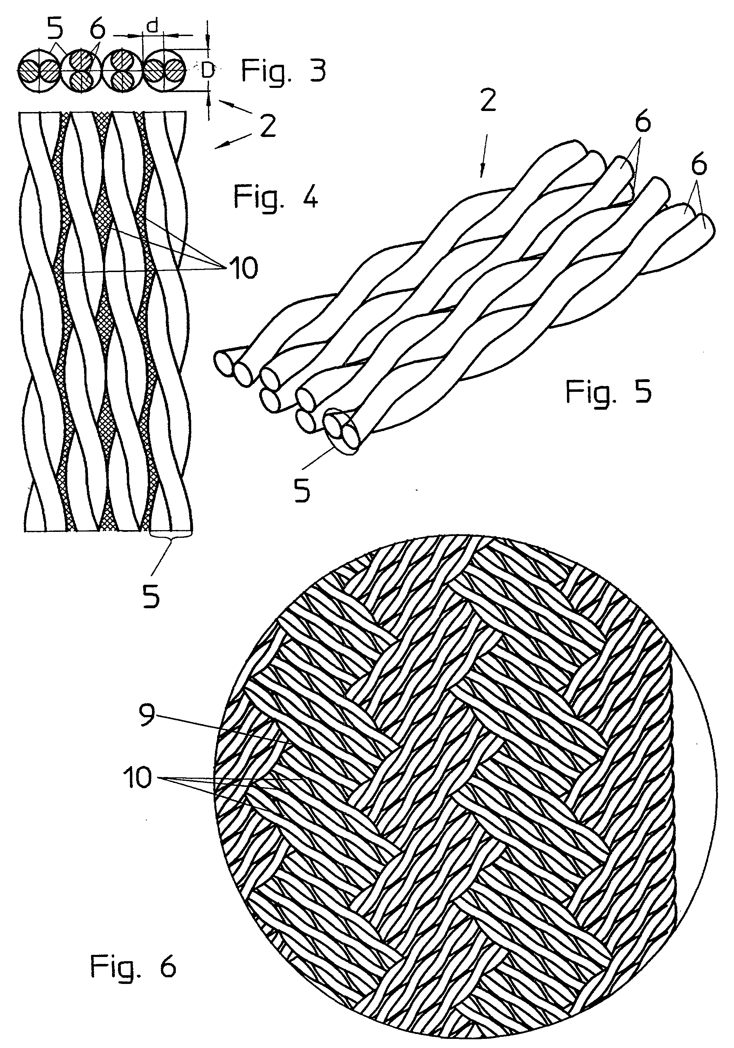

In den Figuren 3 bis 5 ist in verschiedenen Ansichten der Strang 2 dargestellt, der in der Schlauchfiltermembran 1 verwendet ist, wie sie in der Fig. 2 dargestellt ist. Fig. 3 zeigt das Querschnittsbild des Stranges 2, der aus vier nebeneinander angeordneten Litzen 5 besteht. Jede einzelne Litze 5 besteht dabei aus zwei Fäden 6, die miteinander verzwirnt sind. Jeder Faden 6 hat einen Durchmesser d und die beiden miteinander verdrillten Fäden 6 bilden die Litze 5 mit dem Durchmesser D. Dieser Durchmesser D bestimmt den Abstand, mit dem die Litzen 5 nebeneinander liegen, wie dies in dem Querschnittsbild von Fig. 3, der Draufsicht von Fig. 4 und der perspektivischen Ansicht von Fig. 5 gut erkennbar dargestellt ist. In der Draufsicht von Fig. 4 ist durch die schraffierten Bereiche zwischen den vier nebeneinander angeordneten Litzen 5 klar erkennbar, wie die Durchlassöffnungen innerhalb des Stranges 2 gestaltet sind und sich ausbilden durch die verdrillte Gestaltung der Litzen 5. In der perspektivischen Ansicht von Fig. 5 ist gut erkennbar dargestellt, dass es neben den reinen flächigen, senkrecht zur Ebene in Fig. 4 beispielsweise, gegebenen Öffnungen, auch Öffnungen gibt, die räumlich seitlich liegen und durch die das Filtrat bzw. die Filtratflüssigkeit zusätzlich durchtreten kann und andererseits die Feststoffe zurückgehalten werden.

In der Fig. 6 ist schematisch und in wesentlich vergrößerter Darstellung die Flechtart, die Art des Stranges 2 und die verwendete Litze 5 des in Fig. 2 dargestellten abgewickelten Schlauchgeflechtes dargestellt. Sehr gut erkennbar sind hier sowohl die Durchlassöffnungen 9 an den Kreuzungspunkten der miteinander verflochtenen Stränge 2 als auch die Durchlassöffnungen 10 innerhalb der Stränge 2 selbst. Bei der Flechtart übergreift jeweils ein Strang zwei kreuzende Stränge.

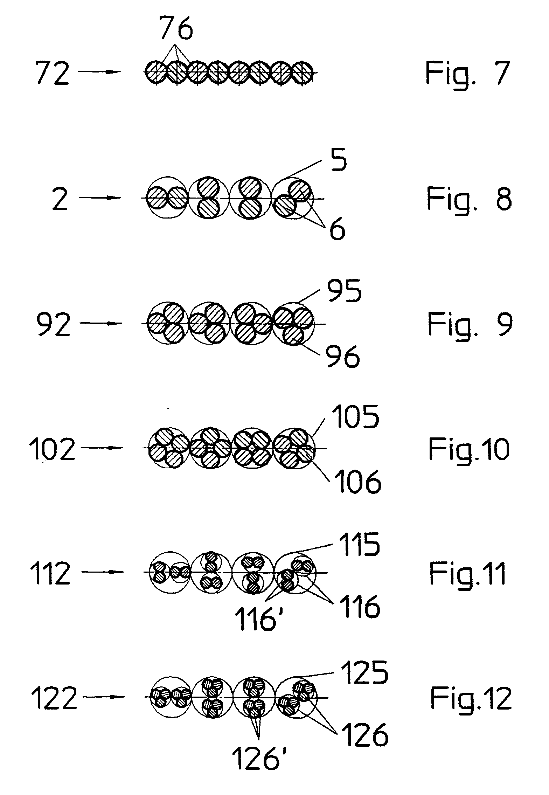

In Fig. 7 ist ein Strang 72 dargestellt, der aus acht nebeneinander liegenden Fäden 76 besteht. Diese liegen direkt nebeneinander und gestatten keinen Durchtritt zwischen den Fäden 76 hindurch. Diese Art Strang, wie sie andeutungsweise mit vier Fäden in der perspektivischen Ansicht von Fig. 1 dargestellt ist, ist also nicht besonders geeignet, um für ein Schlauchfiltergewebe im Sinne der Erfindung leistungsmäßig dienen zu können. Er wird aber hier gezeigt, um die Gestaltung unterschiedlicher Stränge 2 in den nachfolgenden Figuren im Vergleich zu verdeutlichen.

Diese nach der Erfindung gestalteten Stränge in den Figuren 8 bis 12 umfassen jeweils vier Litzen, die aus unterschiedlich vielen Fäden aufgebaut sind. Neben der unterschiedlichen Zahl ist auch die Art der Zusammenstellung der Fäden selbst unterschiedlich. Der in Fig. 8 dargestellte Strang 2 besteht aus vier nebeneinander liegenden Litzen 5 und jede einzelne Litze 5 besteht aus zwei Fäden 6. Dies entspricht dem Beispiel des Stranges 2 und der Litze 5, wie sie im Ausführungsbeispiel der Figuren 2 bis 6 bereits dargestellt worden ist. Dabei sind die beiden Fäden 6 jeder Litze 5 miteinander verdrillt.

Die Fig. 9 zeigt einen Strang 92, der aus vier Litzen 95 besteht, die nebeneinander angeordnet sind. Jede Litze 95 ist aus drei Fäden 96 aufgebaut. Diese drei Fäden 96 einer Litze 95 können beispielsweise miteinander verflochten sein. Somit liegen vier Zöpfe nebeneinander, um den Strang 92 zu bilden. Wie man dem Querschnittsbild in Fig. 9 gut entnehmen kann, ergeben sich dabei unterschiedliche Durchlassgrößen zwischen den einzelnen Litzen 95, die darüber hinaus abhängig sind vom Durchmesser der einzelnen Fäden 96. Diese drei Fäden können neben der Ausführung als Zopf, also miteinander verflochten, auch drei miteinander verdrillte Fäden sein.

Im Querschnittsbild der Fig. 10 ist ein Strang 102 dargestellt, der aus ebenfalls vier nebeneinander liegenden Litzen 105 besteht. Jede einzelne Litze 105 ist aus vier einzelnen Fäden 106 gebildet. Diese sind miteinander verdrillt oder verzwirnt.

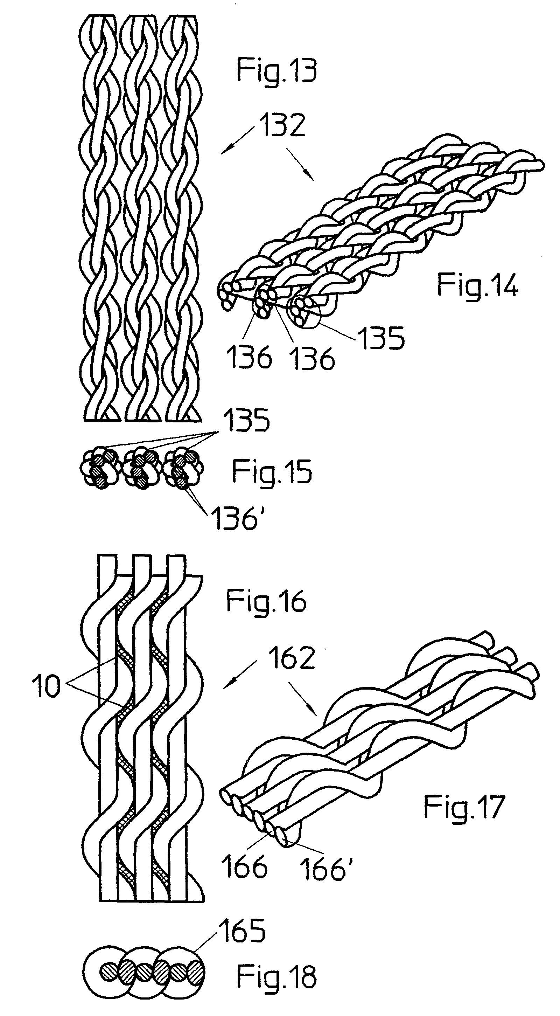

Das Ausführungsbeispiel gemäß Fig. 11 zur Gestaltung eines Stranges 112 beinhaltet ebenfalls wiederum vier nebeneinander liegende Litzen 115, die ebenfalls aus vier einzelnen Fäden besteht. Im Unterschied zur Ausführung gemäß Fig. 10 ist hier jedoch vorgesehen, dass jeweils zwei Fäden 116` für sich miteinander verdrillt sind und somit quasi eine Litze 116 bilden. Dann sind diese beiden verdrillten Litzen 116 als Paar nochmals verdrillt. Somit besteht die Litze 115 aus zwei miteinander verdrillten Paaren 116 von Fäden 116' oder anders ausgedrückt die Litze 115 besteht aus zwei Litzen 5, wie sie in Fig. 8 dargestellt sind. In den Figuren 13 bis 15 sind in verschiedenen Ansichten drei solcher Litzenpaare zu einem Strang 132 in verschiedenen Ansichten dargestellt. Sie werden später noch erläutert werden.

Eine weitere Ausgestaltung ist in Fig. 12 dargestellt. Dabei ist ein Strang 122 gezeigt, der ebenfalls aus vier nebeneinander angeordneten Litzen besteht wie in den anderen Ausführungsbeispielen. Die einzelne Litze 125 besteht hier aus zwei miteinander verdrillten Litzen 126, die denjenigen entsprechen, die als Litze 95 in Fig. 9 bereits dargestellt wurden und aus jeweils drei entweder miteinander verdrillten oder miteinander verflochtenen Fäden 126' bestehen. Auch hier ergeben sich wieder andere Durchlassöffnungen und Konstellationen als bei den Strängen 92, 102 und 112, wie in den Beispielen der Figuren 8 bis 11 dargestellt. Je nach Anwendungsgebiet und Notwendigkeit, auch hinsichtlich der Festigkeit des Schlauchgeflechtes, kann hier eine unterschiedliche Konfiguration entsprechend der Erfindung gewählt werden. Die in den Figuren 8 bis 12 dargestellten Stränge entsprechen einer 4-fach Fachung.

Die Figuren 13, 14 und 15 zeigen schematisch und in vergrößerter Ansicht einen Strang 132, der aus drei Litzen 135, also in 3-fach Fachung, aufgebaut ist. Fig. 13 zeigt die Draufsicht, Fig. 14 zeigt schematisch eine perspektivische Ansicht und Fig. 15 zeigt den Querschnitt durch einen derart aufgebauten Strang 132. Dieser Strang 132 enthält drei Litzen 135, die nebeneinander angeordnet sind. Jede Litze 135 besteht selbst wiederum aus zwei miteinander verdrillten Paaren 136, die ihrerseits allein als eine Litze oder als ein Faden betrachtet werden können. Diese Paar von Litzen oder Fäden 136 sind ihrerseits aus zwei miteinander verdrillten Fäden 136' aufgebaut. Dadurch ergibt sich eine jeweils recht kompakte und Volumen beanspruchende Gestaltung der Litze 135 und des daraus gebildeten Stranges 132.

Eine weitere Gestaltung eines Stranges ist in den Figuren 16 bis 18 dargestellt. Fig. 16 zeigt die Draufsicht, Fig. 17 zeigt die perspektivische Ansicht und Fig. 18 zeigt den Querschnitt durch einen derart aufgebauten Strang 162. Dabei besteht jede Litze 165 für sich aus zwei miteinander verarbeiteten Fäden 166 und 166'. Der eine Faden 166 kann als Mittelfaden bezeichnet werden und ist gerade und um ihn herum gedreht ist ein äußerer Faden 166'. Die Fäden können unterschiedliches Material und unterschiedliche Durchmesser haben. So kann beispielsweise der Mittelfaden 166 aus Metall bestehen und der um ihn herumgewicklete Faden 166' aus geeignetem Kunststoff. Wie die Draufsicht von Fig. 16 zeigt, ergeben sich dadurch ganz eindeutige Größen und Anordnungen der Durchtrittsöffnungen 10 innerhalb des Stranges 162.

Wie in den Ausführungsbeispielen dargestellt, kann jede einzelne Litze 5 aus zwei oder drei Fäden 6 oder aus zwei mal zwei Fäden 116 wie in Fig. 11 oder aus zwei mal drei Fäden 126' wie in Fig. 12 oder drei mal zwei Fäden oder drei mal drei Fäden aufgebaut sein. Die Litzen selbst können aus drei Fäden oder aus drei Litzen aufgebaut sein, die ihrerseits als Zopf geflochten sind. Solche Beispiele sind in Fig. 9 und 12 im Querschnitt gezeigt.

Jeder einzelne Faden 6, 96, 106, 116', 126', 136', 166, 166' kann für sich aus einem Monofilament oder einem Multifilament und/oder gleichen oder unterschiedlichen Materials aufgebaut sein. Hier ist die Variabilität entsprechend der Anwendung sehr groß und vielfältig.

Um den gewünschten Durchmesser des Geflechtschlauchs 1 bei dem Flechten unterschiedlich vieler Stränge 2 zu erzielen, können unterschiedlich viele Stränge vorgesehen sein, insbesondere entsprechend den vorhandenen Maschinenanlagen 40 oder 80 oder 144. Darüber hinaus ist auch eine unterschiedliche Fachung möglich, nämlich eine drei-fach oder vier-fach Fachung. Unter Fachung ist zu verstehen, wieviel einzelne Litzen nebeneinander angeordnet sind und einen Strang bilden. Die Beispiele in den Figuren 8 bis 12 sowie den Figuren 2 bis 6 sind Beispiele für eine vier-fach Fachung und die Beispiele in den Figuren 13 bis 15 bzw. 16 bis 18 zeigen eine drei-fach Fachung mit jeweils drei Litzen 135 bzw. 165, die einen Strang 132 bzw. 162 bilden. Diese Litzen sind im Wesentlichen innerhalb des Strangs immer nebeneinander angeordnet. Wie bereits angedeutet, können die einzelnen Fäden 6, 96, 106, 116', 126', 136', 166 und 166' aus unterschiedlichen Materialien sein. Als Material ist insbesondere Kunststoff geeignet, und zwar PET-Polyester, PA-Polyamid, ElasTer, PTFE-Polytetrafluoräthylen oder auch PVDF-Polyvinylidenfluorid. Die Fäden können auch aus Metall bestehen oder aus einem Gemisch solcher Materialien.

Die Zwirnung der einzelnen Litzen ist eine S/Z-Zwirnung mit gleicher Drehung pro Längeneinheit. Dabei können insbesondere 125, 250, 350, 400, 800 Drehungen pro Meter (T/m) verwendet werden. Die Drehung und die Anzahl der Drehungen ist entsprechend dem Fadendurchmesser gewählt. Wobei eine Drehung etwa dem fünf- bis zwanzig-fachen des Fadendurchmessers beträgt. Der Fadendurchmesser liegt vorteilhafterweise in einer Größenordnung von etwa 0,01 bis 1 mm.

Die bei der Erfindung verwendete Flechtart der Stränge 2 und der anderen Stränge 92, 102, 112, 122, 133, 162 ist unterschiedlich und kann insbesondere von der Art sein, dass abwechselnd ein Strang über dem anderen, ähnlich der Leinenbindung, oder zwei Stränge über zwei Strängen, ähnlich der Köperbindung, vorgesehen ist.

Zur Verbesserung der Ablösung des Filterkuchens von der Innenseite der Schlauchfiltermembran kann vorgesehen sein, das diese auf der Innenseite geglättet ist. Möglich ist es auch, dass durch geeignetes Erwärmen das Geflecht mittels Wärmeschrumpfung, der aus bestimmten Materialien, insbesondere Kunststoff, bestehenden Schlauchfiltermembran, verdichtet werden kann.

Vorstehend wurden verschiedene Möglichkeiten zum Aufbau der erfindungsgemäßen Schlauchfiltermembran dargestellt. Je nach Aufgabenstellung kann das Geflecht aus unterschiedlichen Materialien und in unterschiedlicher Weise aufgebaut sein. Wesentlich ist, dass durch die Öffnungen 9 und 10, die einerseits zwischen den Strängen 2 gebildet werden, und andererseits innerhalb der Stränge selbst durch deren Aufbauweise gebildet sind, die Filtratflüssigkeit abfließen kann und auf der anderen Seite die Feststoffe des Filtrats sicher zurückgehalten werden.

Die erfindungsgemäß gestaltete Schlauchfiltermembran kommt im Gegensatz von der bei Band- und Plattenfilterpressen üblichen flachen Anordnung des Filtergewebes mit aufwendiger Stützkonstruktion ohne jegliche radiale Abstützung aus, da sie in der Verwendung als Filter nur an ihren Enden gehalten ist und dort geöffnet bzw. geschlossen wird. Die zylindrische Filtermembran ergibt eine hohe volumenspezifische Filterfläche bezogen auf das Filterkuchenvolumen und damit einen geringen mittleren Weg der Filtratflüssigkeit durch den Filterkuchen zur Filtermembran. Somit ergeben sich kurze Zykluszeiten sowie geringes Bauvolumen je Flächeneinheit.

Durch die axiale Kontraktion bzw. Streckung des aus den geflochten Strängen gebildeten schlauchartigen Gitternetzes kommt es zu einer Querschnittserweiterung bzw. einer Querschnittskontraktion in Verbindung mit einer Änderung der Größe der Durchtrittsöffnungen für die Flüssigkeit und einer Änderung des Schlauchinnenvolumens.

Somit kann durch passive oder aktive Änderung der Länge der Schlauchfiltermembran einerseits ein Öffnen und Schließen der Filterporen, das bis zur Selbstreinigung gehen kann, und andererseits ein für die Filtration wirksamer Nachpressdruck im Schlauchinnenraum aufgebaut bzw. abgebaut werden. Dies kann hingehen bis zum selbsttätigen Ablösen des stabförmigen Filterkuchens von der Schlauchinnenseite und dem Herausfallen aus der am Ende geöffneten Schlauchfiltermembran. Die Handhabung dieses stabförmig anfallenden Filterkuchens ist sehr einfach, dieser mehr oder weniger von alleine zerbröselt und dadurch einfach gehandhabt und weiterverarbeitet werden kann. Durch die schlauchförmige Gestalt der Filtermembran ist außerdem eine sehr kompakte und platzsparende Bauweise in geschlossenen Behältern und Apparaturen möglich.

Die Anwendung der erfindungsgemäß gestalteten Schlauchfiltermembran ist sehr breit. Sie kann sowohl zum Entwässern von kommunalen Klärschlämmen dienen als auch für andere Anwendungsgebiete, wie in der Lebensmittelindustrie oder in der chemischen Verfahrenstechnik, eingesetzt werden. Auch für mobile Schlammentsorgunganlagen bietet sie sich an. Bei Ersatzinvestitionen bzw. bei Erweiterung vorhandener Anlagen ergibt sich bei gleichem Platzbedarf eine deutlich höhere Durchsatzleistung, da die Erfindung platzsparendes Filtern ermöglicht. Somit schafft die erfindungsgemäß gestaltete Schlauchfiltermembran eine vorteilhafte Basis für verschiedenste Anwendungen in der Filtrationstechnik.

## Patentansprüche

1. Schlauchförmige Filtermembran (1),
die aus gegeneinander verschiebbaren Strängen (2) aufgebaut ist, die miteinander verflochten sind,
**dadurch gekennzeichnet, dass**
die Stränge (2) einen Winkel (3) im Bereich von etwa 25 - 55° mit der Längsachse (4) der Schlauchfiltermembran (1) bilden, jeder Strang (2) aus zumindest zwei Litzen (5) aufgebaut ist, und
jede Litze (5) aus zumindest zwei Fäden (6) besteht, die miteinander verzwirnt oder verdrillt oder verflochten sind.

2. Filtermembran nach Anspruch 1, **dadurch gekennzeichnet, dass** die Litze (5) aus zwei oder drei Fäden (6) oder aus zwei mal zwei Fäden (6) oder aus zwei mal drei Fäden (6), oder drei mal zwei Fäden (6) oder drei mal drei Fäden (6) aufgebaut ist.

3. Filtermembran nach Anspruch 1 oder 2, **dadurch gekennzeichnet, dass** die Litze (5) aus drei Fäden (6) oder drei Litzen (5), die ihrerseits als Zopf geflochten sind, aufgebaut ist bzw. besteht.

4. Filtermembran nach Anspruch 1, 2 oder 3, **dadurch gekennzeichnet, dass** jeder Faden (6) aus einem Monofilament oder einem Multifilament gleichen oder unterschiedlichen Durchmessers und/oder gleichen oder unterschiedlichen Materials aufgebaut ist.

5. Filtermembran nach einem der vorigen Ansprüche, **dadurch gekennzeichnet, dass** für einen gewünschten Durchmesser des Geflechtschlauchs bei dem Verflechten unterschiedlich viele Stränge (2), insbesondere 40, 80, 144 vorgesehen sind und eine unterschiedliche Fachung verwendet ist, insbesondere eine 3-fach oder 4-fach Fachung.

6. Filtermembran nach einem der vorigen Ansprüche, **dadurch gekennzeichnet, dass** die Litzen (5), aus denen die Stränge (2) aufgebaut sind, im Wesentlichen nebeneinander angeordnet sind.

7. Filtermembran nach einem der vorigen Ansprüche, **dadurch gekennzeichnet, dass** die Fäden aus Kunststoff, insbesondere aus Polyester (PET), Polyamid (PA), ElasTer, Polytetrafluorethylen (PTFE), Polyvinylidenfluorid (PVDF) oder aus Metall oder einem Gemisch dieser Materialien bestehen.

8. Filtermembran nach einem der vorigen Ansprüche, **dadurch gekennzeichnet, dass** die Zwirnung der einzelnen Litzen (5) eine S/Z-Zwirnung mit etwa gleicher Drehung pro Längeneinheit, insbesondere ca. 125, 250, 350, 400, 800 T/m (Drehungen pro Meter) beträgt, wobei die Drehung entsprechend dem Fadendurchmesser gewählt ist und insbesondere eine Drehung etwa dem 5- bis 20-Fachen des Fadendurchmessers (d) von etwa 0,01 bis 1 mm entspricht.

9. Filtermembran nach einem der vorigen Ansprüche, **dadurch gekennzeichnet, dass** die Stränge (2) in unterschiedlicher Flechtart verflochten sind, insbesondere in abwechselnder Weise ein Strang über dem anderen, ähnlich der Leinenbindung, oder zwei Stränge über zwei Strängen, ähnlich einer Köperbindung.

10. Filtermembran nach einem der vorigen Ansprüche, **dadurch gekennzeichnet, dass** die Innenseite der Schlauchfiltermembran (1) geglättet ist.

11. Filtermembran nach einem der vorigen Ansprüche, **dadurch gekennzeichnet, dass** durch geeignetes Erwärmen das Geflecht mittels Wärmeschrumpfung der aus bestimmten Materialien bestehenden Schlauchfiltermembran (1) verdichtbar ist.

## Claims

1. A tubular filter membrane (1) configured from mutually translatable, interwoven strands (2), wherein the strands (2) form an angle (3) of about 25° - 55° with respect to the longitudinal axis (4) of the filter membrane, each strand (2) is configured from at least two fibers (5), and each fiber (5) consists of at least two filaments (6) that are braided, twisted, or woven together.

2. A filter membrane according to claim 1, wherein the fibers (5) are configured from two or three filaments (6), two pairs of filaments (6), two bunches of three filaments (6), or three bunches of three filaments (6).

3. A filter membrane according to claim 1 or claim 2, wherein the fibers (5) are configured from, or consist of, three filaments (6) or three braided fibers (5).

4. A filter membrane according to any of claim 1, claim 2, or claim 3, wherein each filament (6) is configured from a monofilament yarn, or from a multifilament yarn whose filaments have the same diameter or differing diameters and/or are fabricated from the same material or differing materials.

5. A filter membrane according to any of the foregoing claims, wherein differing numbers, in particular, 40, 80, or 144, of strands (2), are provided for, and a different type of braiding, in particular, triple or quadruple braiding, is employed for, weaving a woven tube having a desired diameter.

6. A filter membrane according to any of the foregoing claims, wherein the fibers (5) from which the strands (2) are configured are essentially arranged adjacent to one another.

7. A filter membrane according to any of the foregoing claims, wherein the filaments consist of a plastic, in particular, polyester (PE), polyamide (PA), ElasTer, polytetrafluoroethylene (PTFE), or polyvinylidene fluoride (PVDF), a metal, or a mixture of those materials.

8. A filter membrane according to any of the foregoing claims, wherein the interlacing of the individual fibers (5) is an S/Z-interlacing having an approximately constant number of twists per unit length, in particular, approximately 125, 250, 350, 400, or 800 twists/m, where the number of twists per unit length is chosen to suit the fiber diameter and, in particular, corresponds to about 5 to 20 times the fiber diameter, d, of about 0.01 mm to 1 mm.

9. A filter membrane according to any of the foregoing claims, wherein the strands (2) are interwoven in varying patterns, in particular, one strand over the other in alternation, similar to the case of percale fabrics, or two strands over two strands, similar to the case of twill fabrics.

10. A filter membrane according to any of the foregoing claims, wherein the inner surface of the tubular filter membrane (1) is smoothed.

11. A filter membrane according to any of the foregoing claims, wherein the tubular filter membrane (1) consisting of certain materials may be compacted by heat-shrinking it by suitably warming its weave.

## Revendications

1. Membrane de filtre à manche (1) formée d'écheveaux coulissant l'un contre l'autre (2) et tressés entre eux, **caractérisée par le fait que** les écheveaux (2) forment un angle (3) d'environ 25-55°avec l'axe longitudinal (4) de la membrane de filtre à manche (1), que chaque écheveau est formé d'au moins deux torons (5) et que chaque toron (5) est constitué d'au moins deux fils (6) qui sont retordus, torsadés ou tressés entre eux.

2. Membrane de filtre selon la revendication 1, **caractérisée par le fait que** le toron (5) est constitué de deux ou trois fils (6) ou de deux fois deux fils (6) ou de deux fois trois fils (6) ou de trois fois deux fils (6) ou de trois fois trois fils (6).

3. Membrane de filtre selon la revendication 1 ou 2, **caractérisée par le fait que** le toron (5) est composé ou constitué de trois fils (6) ou de trois torons (5) qui sont eux-mêmes tressés en natte.

4. Membrane de filtre selon la revendication 1, 2 ou 3, **caractérisée par le fait que** chaque fil (6) est constitué d'un monofilament ou d'un multifilament de diamètre identique ou différent et/ou de matières identiques ou différentes.

5. Membrane de filtre selon l'une des revendications précédentes, **caractérisée par le fait que** pour un diamètre voulu du tube tressé pour le tressage un nombre d'écheveaux différents (2), notamment 40, 80, 144 ont été prévus et qu'un doublage différent est utilisé, notamment un doublage triple ou quadruple.

6. Membrane de filtre selon l'une des revendications précédentes, **caractérisée par le fait que** les torons (5) qui composent les écheveaux (2) sont, pour l'essentiel, disposés les uns à côté des autres.

7. Membrane de filtre selon l'une des revendications précédentes, **caractérisée par le fait que** les fils sont composés de plastique, notamment de polyester (PET), de polyamide (PA), d'ElasTer, de toron (PFTE), de polyfluorure de vinylidène (PVDF) ou d'un mélange de ceux-ci.

8. Membrane de filtre selon l'une des revendications précédentes, **caractérisée par le fait que** le retordage des cordons (5) correspond à un retordage S/Z avec un nombre de tours à peu près égal par unité de longueur, notamment env. 125, 250, 350, 400, 800 t/m (tours/mètre), la torsion étant choisie en fonction du diamètre du fil et correspondant notamment à une torsion faisant 5 à 20 fois le diamètre du fil (d) d'env. 0,01 à 1 mm.

9. Membrane de filtre selon l'une des revendications précédentes, **caractérisée par le fait que** les écheveaux (2) sont tressés selon des modes de tressage différents, en plaçant notamment un écheveau sur l'autre en alternance, à la façon d'une armure taffetas, ou en plaçant deux écheveaux sur deux écheveaux, à la façon d'une armure sergé.

10. Membrane de filtre selon l'une des revendications précédentes, **caractérisée par le fait que** la face intérieure de la membrane de filtre à manche est lissée.

11. Membrane de filtre selon l'une des revendications précédentes, **caractérisée par le fait que** la membrane de filtre à manche (1) constituée de certaines matières peut être compactée grâce à un échauffement approprié de la tresse par thermorétrécissement.
